# FASCICULE DE BREVET EUROPEEN

(11) **EP 2 217 466 B1**
(45) Date de publication et mention de la délivrance du brevet: **29.06.2011**
(21) Numéro de dépôt: 08857574.1
(22) Date de dépôt: 02.12.2008
(51) Int. Cl.: B60N 2/02

(54) **RACCORDEMENT ELECTRIQUE D'UN ELEMENT D'AMENAGEMENT INTERIEUR D'UN VEHICULE AUTOMOBILE**
ELEKTRISCHER ANSCHLUSS FÜR EIN INNENMONTAGELEMENT FÜR EIN KRAFTFAHRZEUG
ELECTRIC CONNECTION FOR AN INTERIOR FITTING MEMBER FOR AN AUTOMOBILE

(30) Priorité: 03.12.2007 FR 0759497
(43) Date de publication de la demande: 18.08.2010
(73) Titulaire: Renault s.a.s., 92100 Boulogne-Billancourt (FR)
(72) Inventeur: LARVOR, Philippe, F-78960 Voisins-le-Bretonneux (FR)
(86) Numéro de dépôt international: PCT/EP2008/066632
(87) Numéro de publication internationale: WO 2009/071543

(56) Documents cités:
- EP-A- 1 093 959
- FR-A- 2 883 423
- US-A- 6 011 318

## Description

La présente invention se rapporte à un dispositif pour la connexion électrique d'éléments d'aménagement intérieur d'un véhicule automobile, en particulier des éléments électriques d'un siège, par exemple pour la connexion d'un moteur de réglage de la position verticale ou longitudinale dudit siège, ou pour la commande d'un coussin de sécurité dont le gonflage peut, par exemple, être déclenché par un détonateur pyrotechnique à commande électrique.

D'une manière générale, peu d'aménagements particuliers sont mis en place pour la réalisation de telles connexions : au moins un faisceau électrique provenant du plancher, protégé par une gaine renforcée, se termine, le plus souvent, par un connecteur faisant saillie sur ledit plancher, dans une zone généralement située sous ledit siège ; au moins un faisceau électrique complémentaire, provenant dudit siège à raccorder, étant également placé dans une gaine protectrice terminée par un connecteur placé dans une zone dudit siège permettant la connexion (voir, à titre d'exemple non exhaustif, le document EP1093959).

Un tel aménagement n'offre toutefois pas une protection satisfaisante desdits faisceaux électriques, ceux-ci pouvant être déconnectés, endommagés, voire rompus, en particulier par des objets glissés sous le siège par l'utilisateur du véhicule. De plus, les sollicitations mécaniques parfois importantes auxquelles sont soumis lesdits dispositifs de connexion lors, notamment, des déplacements dudit siège, sont une source complémentaire de mauvais contacts ou déconnexions desdits connecteurs, ainsi que les risques liés à des chutes accidentelles de liquide, par exemple.

Le document EP1138555 propose la mise en place d'une gaine articulée destinée à protéger lesdits faisceaux électriques lors des déplacements du siège avant d'un véhicule automobile. Ladite gaine est sensiblement placée sous ledit siège et, à l'une de ses extrémités, raccordée à une platine de connexion fixée sur le plancher du véhicule et accueillant le faisceau électrique provenant dudit plancher, et, à son autre extrémité, fixée à un élément d'armature de l'assise dudit siège. Si un tel dispositif offre une protection supplémentaire des faisceaux électriques, il ne garantit toutefois pas, du fait de sa position sous le siège, la protection contre les endommagements potentiels liés à la présence d'objets sous ledit siège ou contre les autres sources de mauvais contacts évoquées plus haut.

Le document FR 2 883 423 propose un dispositif de connexion comportant un soubassement rigide et un carter d'habillage dudit soubassement rigide. Selon la publication, le dispositif de connexion met en oeuvre, d'une part, au moins un faisceau électrique en provenance du plancher dudit véhicule, terminé par un connecteur approprié, et, d'autre part, au moins un faisceau électrique en provenance dudit siège, également terminé par un connecteur approprié, la connexion s'effectuant au moyen d'au moins un connecteur approprié destiné à coopérer respectivement avec lesdits connecteurs appropriés terminant lesdits faisceaux électriques. Avantageusement, ledit connecteur est placé sur une platine de connexion insérée entre une face externe dudit soubassement rigide orientée vers la portière dudit véhicule près de laquelle ledit siège est placé et la face interne dudit carter d'habillage lui correspondant.

Cependant, même si un tel carter offre une ouverture dont la forme et les dimensions sont appropriées pour le passage de la main d'un opérateur et permettent l'accès au connecteur et à la plaque de connexion, un opérateur ne peut pas visualiser le montage des connecteurs ensembles et donc s'assurer que la connexion est bien effectuée, le visuel étant un moyen de vérification supplémentaire à une vérification manuelle de la connexion en aveugle. Par ailleurs, le fait de passer la main dans une ouverture étroite reste tout de même contraignant pour l'opérateur.

La présente invention a pour but de proposer un aménagement pour la connexion des éléments électriques du siège d'un véhicule automobile, dans lequel les connecteurs et faisceaux électriques sont protégés des agressions évoquées ci-dessus, ledit aménagement fournissant en outre la possibilité d'une connexion robuste, ainsi qu'un accès aisé pour les opérations de montage, de contrôle ou de maintenance offrant un moyen de vérification supplémentaire visuel.

L'invention atteint son but grâce à un dispositif pour la connexion des éléments électriques d'un siège d'un véhicule automobile, ledit siège comportant notamment un soubassement rigide comprenant deux supports de siège latéraux entre lesquels se trouve un élément rigide transversal, ledit dispositif de connexion mettant en oeuvre, d'une part, au moins un premier faisceau électrique en provenance du plancher dudit véhicule, terminé par un premier connecteur approprié, et, d'autre part, au moins un second faisceau électrique en provenance dudit siège, également terminé par un second connecteur approprié, la connexion s'effectuant en connectant ensemble les premier et second connecteurs appropriés, un desdits connecteurs appropriés étant placé sur une platine de connexion réalisée à cet effet, caractérisé en ce que ladite platine de connexion comprend au moins un moyen de fixation amovible destiné à coopérer avec ledit élément rigide transversal disposé à l'avant du soubassement, de manière à rendre la platine maniable lors de la connexion tout en assurant une connexion sécurisée.

Avantageusement, l'invention peut également présenter une ou plusieurs des caractéristiques suivantes :
- ladite platine de connexion peut présenter une surface supérieure comprenant les moyens de réceptions dudit connecteur approprié et une surface inférieure comprenant ledit au moins un moyen de fixation amovible audit élément rigide transversal,
- ledit moyen de fixation amovible peut être réalisé dans un matériau déformable élastiquement comprenant une ouverture appropriée pour sa mise en place sur ledit élément transversal rigide ou son retrait dudit élément transversal, ledit moyen de fixation amovible possédant des dimensions et une forme aptes à serrer l'élément transversal une fois la platine mise en place sur ledit élément transversal,
- ledit élément transversal peut être un tube et ledit moyen de fixation amovible correspondant de la platine peut être un anneau ouvert déformable élastiquement lors de sa mise en place sur ledit tube, la platine étant apte à pivoter en rotation autour de l'axe du tube lorsqu'elle est montée sur le tube transversal pour faciliter la connexion des connecteurs,

- un moyen de fixation amovible peut être disposé à chaque extrémité de la platine,
- la platine peut comporter deux rebords latéraux sensiblement perpendiculaires à la surface inférieure de la platine orientés vers cette même surface, chacun desdits rebords comprenant des moyens de réception pour des éléments disposés autour des faisceaux électriques de manière à guider respectivement ledit au moins faisceau électrique provenant dudit plancher dudit véhicule et ledit au moins faisceau électrique provenant dudit siège, lorsque lesdits éléments des faisceaux électriques coopèrent avec lesdits moyens de réception de la platine, afin de définir un chemin de câbles pour chacun desdits au moins un faisceau électrique,
- lesdits moyens de réception des rebords de la platine peuvent être des orifices,
- la platine de connexion peut comporter à une de ses extrémités un moyen d'indexage apte à la bloquer sensiblement transversalement, et
- le connecteur approprié placé de manière permanente sur la platine de connexion peut être celui correspondant au second faisceau électrique en provenance dudit siège.

L'invention concerne également un véhicule automobile équipé d'au moins un siège dont les éléments électriques sont connectés au moyen d'au moins un tel dispositif.

D'autres caractéristiques et avantages de l'invention apparaîtront clairement à la lecture de la description suivante, en liaison avec les figures annexées dans lesquelles :
- la figure 1 représente une vue en perspective de la platine selon l'invention comprenant un connecteur et montée sur un élément transversal rigide d'un siège de véhicule automobile,
- la figure 2 représente une vue en perspective de la platine selon l'invention comprenant un connecteur et démontée de l'élément transversal rigide d'un siège de véhicule automobile,
- la figure 3 représente une vue en perspective de la platine selon l'invention montée sur le tube et pivotée autour de l'axe de l'élément transversal rigide de manière à faciliter l'opération de connexion, et
- la figure 4 représente une vue en perspective des deux connecteurs connectés ensemble dans une position définitive d'utilisation.

Dans la description qui va suivre, des éléments identiques, similaires ou analogues seront désignés par les mêmes chiffres de référence.

Par ailleurs, pour l'ensemble des figures et dans l'ensemble de la description qui suit, une même notation désigne le même élément. De même, dans ce qui suit, on désignera par « supérieure» une face d'un élément orienté verticalement vers le haut du véhicule, c'est-à-dire vers le dessous de l'assise du siège, et par « inférieure » toute face opposée à ladite face « supérieure ». Enfin, on désignera les termes « avant » et « arrière » en référence au sens de marche classique d'un véhicule automobile.

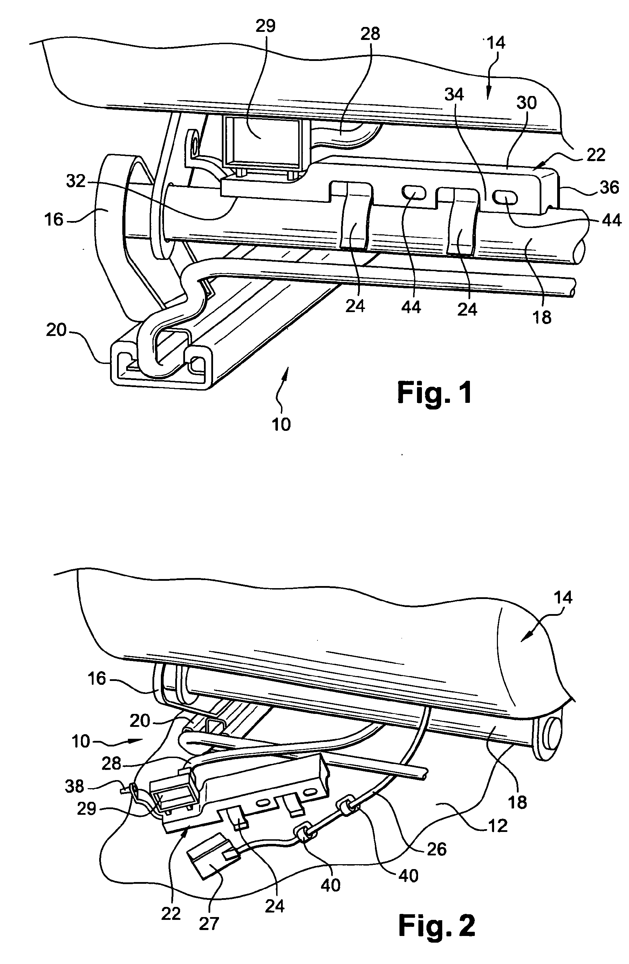

En référence aux figures, il est représenté des vues en perspective de la face avant d'un soubassement rigide 10 d'un siège 14 avant de véhicule automobile comportant deux supports latéraux 16 rigides entre lesquels se trouve un élément transversal rigide 18 fixé de manière rigide, par exemple, par soudage. Lesdits supports latéraux de sièges sont fixés sur au moins un rail 20 (illustré sur la figure 2) solidaire d'un plancher 12 dudit véhicule.

Afin d'effectuer le raccordement de l'ensemble des éléments électriques dudit siège, au moins un premier faisceau électrique 26 est issu dudit plancher 12 dudit véhicule, et équipé, à son extrémité libre débouchant dans l'habitable dudit véhicule, d'un premier connecteur approprié 27 et au moins un second faisceau électrique 28 complémentaire est issu dudit siège 14 et est équipé, à son extrémité libre, d'un connecteur approprié 29.

Selon le mode de réalisation de l'invention, une platine de connexion 22, dont les différentes parties seront détaillées ultérieurement, est placée grâce à des moyens de fixation 24 appropriés sur l'élément transversal rigide 18, qui est un tube de section circulaire, et accueille au moins un connecteur 27, 29, selon l'invention il s'agira du second connecteur 29 destiné à coopérer avec le premier connecteur approprié 27 terminant ledit au moins un faisceau électrique 26 provenant du plancher. Cette disposition de la platine sur une face avant d'un soubassement est particulièrement avantageuse car un opérateur aura un accès facilité pour la connexion. En effet, cette zone est spacieuse et n'est pas encombrée par des éléments du véhicule puisque en avant de ce soubassement se trouve traditionnellement le plancher apte à recevoir les pieds d'un passager assis sur un siège nécessitant une telle connexion. C'est ainsi une zone bien visible pour l'opérateur et rendant les manipulations aisée lors de la connexion. Par ailleurs, ce tube 18 est placé à une certaine hauteur du sol, ce qui évite ainsi tout risque de déconnexion, d'endommagement, voire de rupture, en particulier par des objets glissés sous le siège par l'utilisateur du véhicule. De plus, la hauteur de ce tube sur lequel vient se positionner la platine de connexion permet de se prémunir des sollicitations mécaniques parfois importantes auxquelles sont soumis lesdits dispositifs de connexion lors, notamment, des déplacements dudit siège, qui sont une source complémentaire de mauvais contacts ou déconnexions desdits connecteurs, ainsi que les risques liés à des chutes accidentelles, par exemple, de liquide.

Ainsi que le présente les figures, ladite platine 22 comporte une surface supérieure 30 comprenant les moyens de réceptions (non représenté sur les figures) du premier connecteur 27 et une surface inférieure 32 comprenant ledit au moins un moyen de fixation 24 amovible audit tube rigide transversal 18. La platine comporte, en outre, deux rebords latéraux 34, 36 sensiblement perpendiculaires à la surface inférieure de la platine orientés vers cette même surface, chacun desdits rebords comprenant des moyens de réception pour des éléments disposés autour des faisceaux électriques de manière à guider respectivement ledit au moins faisceau électrique provenant dudit plancher dudit véhicule et ledit au moins faisceau électrique provenant dudit siège, lorsque lesdits éléments des faisceaux électriques coopèrent avec lesdits moyens de réception de la platine.

Selon un premier mode de réalisation, la surface inférieure 32 comporte des orifices au travers desquels les moyens de fixation 24 amovibles viennent se solidariser à la platine. Les moyens de fixation 24 comportent, par exemple, des doigts de blocage apte à entrer en force dans les orifices pour se solidariser à la platine 22.

Selon un second mode de réalisation, la platine 22 et les moyens de fixation 24 sont réalisés d'une seule pièce par moulage.

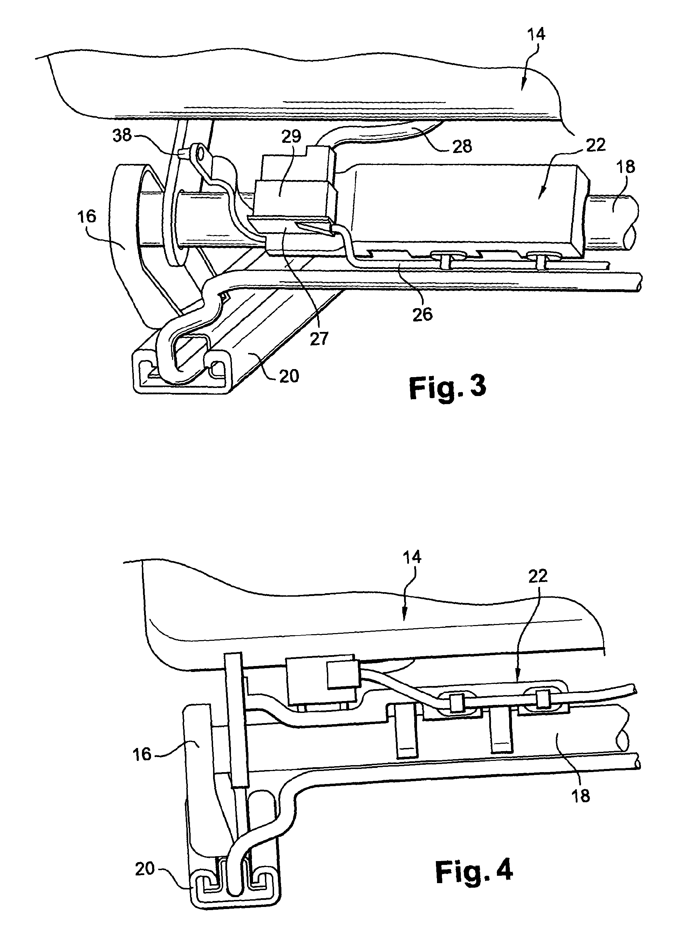

Les moyens de fixation 24 sont répartis transversalement le long de la platine. Selon l'invention, la platine 22 comporte un moyen de fixation sensiblement au niveau de chaque extrémité de la platine. Le moyen de fixation amovible 24 a sensiblement la forme d'une pince destinée à coopérer avec le tube 18. Plus précisément selon l'invention, dans le cas d'un élément transversale 18 tubulaire, il s'agira d'un anneau réalisé dans un matériau déformable élastiquement comprenant une ouverture appropriée pour la mise en place ou le retrait dudit tube transversal rigide. Selon l'invention, un opérateur pourra ainsi, pour connecter les deux connecteurs 27 et 29 : retirer la platine du tube 18 par retrait en force des anneaux, connecter les connecteurs et remettre la platine sur le tube par ouverture élastique des anneaux. Les anneaux reviennent ensuite dans une position de repos, où ils encerclent et serrent le tube 18. Ceci permet ainsi d'assurer un contact sécurisé des connecteurs 27, 29, en ce sens que l'opérateur a accès facilement à la platine et peut la démonter facilement pour la manipuler. Il aura alors loisir de visualiser la connexion effectuée. Par ailleurs, le fait que l'élément transversal soit tubulaire et que les moyens de fixation amovibles soit des anneaux présente l'avantage que, dans le cas où la platine 22 est montée sur le tube 18, l'opérateur peut faire pivoter la platine vers lui, tel que la figure 3 le présente, pour avoir accès au connecteur 29, et le connecter au connecteur 27 sans nécessiter le retrait complet de la platine du tube. Ceci est particulièrement bénéfique pour un opérateur en terme de gain de temps et en terme de réalisation et de visualisation de la connexion effectuée simplement par pivotement.

La platine comporte aussi deux rebords latéraux, un bord avant 34 et un bord arrière 36, tels que définis plus haut dans la description. Chaque rebord comprend des orifices 44 (visibles sur la figure 1 par exemple) de réception, destinés à coopérer avec des doigts 40 de blocage se trouvant sur des anneaux de serrage disposés sur les faisceaux électriques et encerclant lesdits faisceaux. Ainsi selon l'invention, le couplage de ces doigts 40 avec les orifices 44 permet de définir un chemin de faisceaux électriques pour chacun desdits au moins un faisceau électrique. Selon notre mode de réalisation, le premier faisceau électrique 26 provenant du plancher est solidarisé avec le rebord avant 34 et le second faisceau électrique 28 provenant du siège est solidarisé avec le rebord arrière 36. Ceci permettant de renforcer la sécurisation de la connexion en évitant que les faisceaux soient libres sous le siège, ce qui peut provoquer des risques supplémentaires de connexion lors, par exemple, du déplacement du siège 14 sur ses rails 20.

Enfin, la platine 22 comporte au niveau d'une de ses extrémités un moyen d'indexage 38 pour assurer son blocage sensiblement transversalement sur le tube 18. Ainsi, la position de la platine sera toujours compatible avec des éléments que l'on pourrait trouver sous l'assise du siège comme par exemple un tiroir sous siège, un chargeur de CD, un outil permettant la navigation, des moteurs électriques de translation. Le moyen d'indexage est un clip venant se fixer sur un élément latéral du siège.

Il convient de noter qu'un cache amovible (non représenté sur les figures) peut être positionné pour obturer l'avant du soubassement au niveau duquel se trouve le dispositif de connexion selon l'invention.

Selon l'invention d'autres connecteurs pourront être ajoutés sur cette platine suivant les besoins, par exemple un connecteur pour rendre mobile électriquement le siège.

Le dispositif selon l'invention permet donc une connexion très sécurisée, aisée, rapide et facile d'accès des éléments électriques du siège d'un véhicule automobile.

## Revendications

1. Dispositif pour la connexion des éléments électriques d'un siège (14) d'un véhicule automobile, ledit siège comportant notamment un soubassement (10) rigide comprenant deux supports de siège latéraux (16) entre lesquels se trouve un élément rigide transversal (18), ledit dispositif de connexion mettant en oeuvre, d'une part, au moins un premier faisceau électrique (26) en provenance du plancher dudit véhicule, terminé par un premier connecteur approprié (27), et, d'autre part, au moins un second faisceau électrique (28) en provenance dudit siège, également terminé par un second connecteur approprié (29), la connexion s'effectuant en connectant ensemble les premier (27) et second (29) connecteurs appropriés, un desdits connecteurs appropriés étant placé sur une platine (22) de connexion réalisée à cet effet, **caractérisé en ce que** ladite platine de connexion comprend au moins un moyen de fixation amovible (24) destiné à coopérer avec ledit élément rigide transversal disposé à l'avant du soubassement, de manière à rendre la platine démontable et maniable lors de la connexion tout en assurant une connexion sécurisée.

2. Dispositif selon la revendication 1, **caractérisé en ce que** ladite platine (22) de connexion présente une surface supérieure (30) comprenant les moyens de réceptions dudit connecteur approprié et une surface inférieure (32) comprenant ledit au moins un moyen de fixation amovible (24) audit élément rigide transversal (18).

3. Dispositif selon l'une des revendications 1 ou 2, **caractérisé en ce que** ledit moyen de fixation amovible (24) est réalisé dans un matériau déformable élastiquement comprenant une ouverture appropriée pour sa mise en place sur ledit élément transversal rigide (18) ou son retrait dudit élément transversal, ledit moyen de fixation amovible possédant des dimensions et une forme aptes à serrer l'élément transversal une fois la platine (22) mise en place sur ledit élément transversal.

4. Dispositif selon l'une des revendications précédentes, **caractérisé en ce que** ledit élément transversal (18) est un tube et ledit moyen de fixation amovible (24) correspondant de la platine (22) est un anneau ouvert déformable élastiquement lors de sa mise en place sur ledit tube, la platine étant apte à pivoter en rotation autour de l'axe du tube lorsqu'elle est montée sur le tube transversal pour faciliter la connexion des connecteurs.

5. Dispositif selon l'une des revendications précédentes, **caractérisé en ce qu'**un moyen de fixation amovible (24) est disposé à chaque extrémité de la platine (22).

6. Dispositif selon l'une des revendications précédentes, **caractérisé en ce que** la platine comporte deux rebords latéraux (34 , 36) sensiblement perpendiculaires à la surface inférieure (32) de la platine (22) orientés vers cette même surface, chacun desdits rebords comprenant des moyens de réception (44) pour des éléments (42) disposés autour des faisceaux électriques (26, 28) de manière à guider respectivement ledit au moins faisceau électrique (26) provenant dudit plancher dudit véhicule et ledit au moins faisceau électrique (28) provenant dudit siège, lorsque lesdits éléments (42) des faisceaux électriques coopèrent avec lesdits moyens de réception (44) de la platine, afin de définir un chemin de câbles pour chacun desdits au moins un faisceau électrique.

7. Dispositif selon la revendication 6, **caractérisé en ce que** lesdits moyens de réception (44) des rebords de la platine sont des orifices.

8. Dispositif selon l'une des revendications précédentes, **caractérisé en ce que** la platine de connexion (22) comporte à une de ses extrémités un moyen d'indexage (38) apte à la bloquer sensiblement transversalement.

9. Dispositif selon l'une des revendications précédentes, **caractérisé en ce que** le connecteur approprié placé de manière permanente sur la platine de connexion (22) est celui correspondant au second faisceau électrique (28) en provenance dudit siège (14).

10. Véhicule automobile équipé d'au moins un siège (14) dont les éléments électriques sont connectés au moyen d'au moins un dispositif selon l'une quelconque des revendications 1 à 9.

## Claims

1. Device for connecting the electrical elements of a seat (14) of a motor vehicle, the said seat notably comprising a rigid underframe (10) comprising two lateral seat supports (16) between which there is a rigid transverse element (18), the said connection device implementing, on the one hand, at least one first electric wiring harness (26) coming from the floor of the said vehicle, ending in a suitable first connector (27), and, on the other hand, at least one second electric wiring harness (28) coming from the said seat, likewise terminating in a suitable second connector (29), connection being made by connecting together the first (27) and second (29) suitable connectors, one of the said suitable connectors being positioned on a connection mounting plate (22) produced for this purpose, **characterized in that** the said connection mounting plate comprises at least one removable attachment means (24) intended to collaborate with the said rigid transverse element positioned at the front of the underframe, so as to make it possible for the mounting plate to be removed and manipulated while the connection is being made, while at the same time affording a secure connection.

2. Device according to Claim 1, **characterized in that** the said connection mounting plate (22) has an upper surface (30) comprising the means of reception of the said suitable connector and a lower surface (32) comprising the said at least one means (24) of removable attachment to said rigid transverse element (18).

3. Device according to either of Claims 1 and 2, **characterized in that** the said removable attachment means (24) is made of an elastically deformable material comprising an opening suited to its being fitted onto the said rigid transverse element (18) or removed from the said transverse element, the said removable attachment means having dimensions and a shape which are capable of clamping the transverse element once the mounting plate (22) has been fitted onto the said transverse element.

4. Device according to one of the preceding claims, **characterized in that** the said transverse element (18) is a tube and the said corresponding removable attachment means (24) belonging to the mounting plate (22) is an open ring that can be elastically deformed as it is fitted onto the said tube, the mounting plate being capable of pivoting rotationally about the axis of the tube when mounted on the transverse tube in order to make it easier to connect the connectors.

5. Device according to one of the preceding claims, **characterized in that** a removable fastening means (24) is arranged at each end of the mounting plate (22).

6. Device according to one of the preceding claims, **characterized in that** the mounting plate comprises two lateral upstands (34, 36) substantially perpendicular to the lower surface (32) of the mounting plate (22) and directed towards this same surface, each of the said upstands comprising receiving means (44) for elements (42) arranged around the electric wiring harnesses (26, 28) in such a way as respectively to guide the said at least one electric wiring harness (26) coming from the said floor of the said vehicle and the said at least one electric wiring harness (28) coming from the said seat, when the said elements (42) of the electric wiring harnesses collaborate with the said receiving means (44) of the mounting plate, so as to define a cable way for each of the said at least one electric wiring harnesses.

7. Device according to Claim 6, **characterized in that** the said receiving means (44) of the upstands of the mounting plate are holes.

8. Device according to one of the preceding claims, **characterized in that** the connection mounting plate (22) comprises, at one of its ends, an indexing means (38) capable of immobilizing it substantially transversally.

9. Device according to one of the preceding claims, **characterized in that** the suitable connector positioned permanently on the connection mounting plate (22) is the one that corresponds to the second electric wiring harness (28) coming from the said seat (14).

10. Motor vehicle equipped with at least one seat (14) the electrical elements of which are connected by means of at least one device according to any one of Claims 1 to 9.

## Patentansprüche

1. Vorrichtung für den Anschluss elektrischer Elemente eines Sitzes (14) eines Kraftfahrzeugs, wobei der Sitz insbesondere einen starren Unterbau (10) mit zwei seitlichen Sitzträgern (16) aufweist, zwischen denen sich ein transversales starres Element (18) befindet, wobei die Anschlussvorrichtung einerseits wenigstens einen ersten Kabelstrang (26), der vom Boden des Fahrzeugs ausgeht und in einem geeigneten Verbinder (27) endet, und andererseits wenigstens einen zweiten Kabelstrang (28), der vom Sitz ausgeht und ebenfalls in einem zweiten geeigneten Verbinder (29) endet, verwendet, wobei der Anschluss durch Verbinden des ersten geeigneten Verbinders (27) und des zweiten geeigneten Verbinders (29) miteinander erfolgt, wobei einer der geeigneten Verbinder auf einer hierzu hergestellten Anschlussplatine (22) angeordnet ist, **dadurch gekennzeichnet, dass** die Anschlussplatine wenigstens ein lösbares Befestigungsmittel (24) umfasst, das dazu bestimmt ist, mit dem transversalen starren Element zusammenzuwirken, das vor dem Unterbau angeordnet ist, so dass die Platine beim Verbinden demontierbar und handhabbar ist, wobei eine gesicherte Verbindung gewährleistet ist.

2. Vorrichtung nach Anspruch 1, **dadurch gekennzeichnet, dass** die Anschlussplatine (22) eine obere Oberfläche (30), die die Mittel für die Aufnahme des geeigneten Verbinders aufweist, und eine untere Oberfläche (32), die das wenigstens eine Mittel (24) für eine lösbare Befestigung an dem transversalen starren Element (18) aufweist, umfasst.

3. Vorrichtung nach einem der Ansprüche 1 oder 2, **dadurch gekennzeichnet, dass** das lösbare Befestigungsmittel (24) aus einem elastisch verformbaren Werkstoff verwirklicht ist und eine geeignete Öffnung aufweist, um es an dem starren transversalen Element (18) anzuordnen oder es von dem transversalen Element zurückzuziehen, wobei das lösbare Befestigungsmittel Abmessungen und eine Form besitzt, die geeignet sind, das transversale Element einzuklemmen, sobald die Platine (22) an dem transversalen Element angeordnet worden ist.

4. Vorrichtung nach einem der vorhergehenden Ansprüche, **dadurch gekennzeichnet, dass** das transversale Element (18) ein Rohr ist und das lösbare Befestigungsmittel (24), das der Platine (22) entspricht, ein offener Ring ist, der bei seiner Anordnung an dem Rohr elastisch verformbar ist, wobei die Platine rotatorisch um die Achse des Rohrs schwenken kann, wenn sie an dem transversalen Rohr montiert ist, um die Verbindung der Verbinder zu erleichtern.

5. Vorrichtung nach einem der vorhergehenden Ansprüche, **dadurch gekennzeichnet, dass** ein lösbares Befestigungsmittel (24) an jedem Ende der Platine (22) angeordnet ist.

6. Vorrichtung nach einem der vorhergehenden Ansprüche, **dadurch gekennzeichnet, dass** die Platine zwei seitliche Ränder (34, 36) besitzt, die zu der unteren Oberfläche (32) der Platine (22) im Wesentlichen senkrecht sind und zu dieser Oberfläche orientiert sind, wobei jeder dieser Ränder Mittel (44) für die Aufnahme von Elementen (42) aufweist, die um die Kabelstränge (26, 28) angeordnet sind, um den wenigstens einen Kabelstrang (26), der vom Boden des Fahrzeugs ausgeht, bzw. den wenigstens einen Kabelstrang (28), der vom Sitz ausgeht, zu führen, wenn die Elemente (42) der Kabelstränge mit den Mitteln (44) für die Aufnahme der Platine zusammenwirken, um einen Kabelweg für jeden des jeweils wenigstens einen Kabelstrangs zu definieren.

7. Vorrichtung nach Anspruch 6, **dadurch gekennzeichnet, dass** die Mittel (44) für die Aufnahme der Ränder der Platine Öffnungen sind.

8. Vorrichtung nach einem der vorhergehenden Ansprüche, **dadurch gekennzeichnet, dass** die Anschlussplatine (22) an einem ihrer Enden ein Indexierungsmittel (38) aufweist, das sie im Wesentlichen transversal blockieren kann.

9. Vorrichtung nach einem der vorhergehenden Ansprüche, **dadurch gekennzeichnet, dass** der geeignete Verbinder, der dauerhaft an der Anschlussplatine (22) angeordnet ist, jener ist, der dem zweiten Kabelstrang (28) entspricht, der vom Sitz (14) ausgeht.

10. Kraftfahrzeug, das mit wenigstens einem Sitz (14) ausgestattet ist, dessen elektrische Elemente mittels wenigstens einer Vorrichtung nach einem der Ansprüche 1 bis 9 angeschlossen sind.
